# EUROPEAN PATENT APPLICATION

(11) **EP 3 418 920 A1**
(43) Date of publication of application: **26.12.2018**
(21) Application number: 18186408.3
(22) Date of filing: 12.12.2006
(51) Int. Cl.: G06F 17/30

(54) **MEDIA LIBRARY IN AN INTERACTIVE MEDIA GUIDANCE APPLICATION**

(30) Priority: 29.12.2005 US 323906
(62) Divisional of application: 06847579.7
(71) Applicant: Rovi Guides, Inc., San Jose, CA 95002 (US)
(72) Inventor: THOMAS, William L., Malvern, Pennsylvania 19355 (US); WALKER, Todd A., Berwyn, Pennsylvania 19312 (US)
(74) Representative: Pisani, Diana Jean

(57) **Abstract**

Systems and methods for selecting content for a media library using an interactive media guidance application are provided. The user may search for content to select by entering search terms in a search page and selecting content from search results in a search results page. The user may also select content by directly entering identification for the content, selecting content from a message suggesting content, or by selecting content from interactive media guidance application pages. The content may include content that is currently available and bookmarks for content that is not yet available. For such bookmarks, when. the content becomes available, the interactive media guidance application may notify the user and/or add the actual content to the media library. The user may access the media library from any user device and perform any suitable operation with the content of the media library (e.g., download content to a user device or playback content) .

## Description

### Background of the Invention

This invention relates to interactive media guidance applications, and more particularly, to interactive media guidance applications that a user can connect to and access from a multitude of user devices.

Interactive media guidance applications, for example interactive television program guides, allow users to view screens of interactive television program listings, search for programs or content, and select one or more search results for immediate playback or future use (e.g., set a reminder). In some embodiments, the interactive media guidance applications may be online interactive media guidance applications provided to users over an Internet communications link (e.g., using interactive media guidance application web pages).

Known interactive media guidance applications allow users to search for content available from a multitude of sources using a particular device, and to save search terms and searches for future use with that particular device. Some known interactive media guidance applications allow users to download or order content for viewing with the particular device.

Known interactive media guidance applications do not allow users to search for content, to receive a list of search results, to select some search results from the list of search results, or to save the selected search results for future access (e.g., for future playback). Furthermore, known interactive media guidance applications do not allow users to search for content using one device, and to download or order the content on a different device.

In view of the foregoing, it would be desirable to provide systems and methods for creating a media library of user-selected content and/or bookmarks that is accessible from a plurality of user devices. It would also be desirable to identify and select content and/or bookmarks for the media library using any suitable means, including searching for content, receiving recommendations for content, and directly entering content identification information.

### Summary of the Invention

In accordance with the principles of the present invention, systems and methods for an interactive media guidance application are provided for creating a media library of user-selected content that is accessible from a plurality of user devices. The user may place available content in the media library, or the user may place a placeholder bookmark for content that is not yet available in the media library.

The user may add content to the media library in any suitable manner. For example, the interactive media guidance application may provide a search page in which a user may enter search terms and search options to search for content. The interactive media guidance application may search for content satisfying the search terms and options entered by the user, and provide search results to the user in a search results page. The user may select some or all of the search results and place the selected search results in the media library. As another example, the user may select content from listings (e.g., program listings), or directly enter identification information for content that the user would like to add to the media library (e.g., by entering a program title). In some embodiments the content itself is added to the media library. In other embodiments content may be added to the media library by storing a link to the content in the media library.

The user may access the media library with any number of different devices including, for example, a television system, a personal computer, a cellular telephone, a personal digital assistant, a portable media player, or any other user device. The user may, for example, have a network of devices and may use different devices at different times. Using a user device, the user may direct the interactive media guidance application to perform any suitable operation on the content and bookmarks of the media library. Such operations may include setting reminders, scheduling recordings, downloading content to one or more user devices, setting e-mail or text message notification options (e.g., to receive a notification when content has been downloaded), or any other interactive media guidance application operation. In some embodiments, the media library may be provided on a web server and accessed over an Internet communications link.

Some content may be available to the user for a fee (e.g., on-demand content). For example, the user may purchase the content when it is placed in the media library. Alternatively, the user may add content to the media library for free, but be charged for the content when it is downloaded to a user device, or when it is played back from a user device.

### Brief Description of the Drawings

The above and other objects and advantages of the invention will be apparent upon consideration of the following detailed description, taken in conjunction with the accompanying drawings, in which like reference characters refer to like parts throughout, and in which:
FIG. 1 is a diagram of an illustrative interactive media system in accordance with the present invention;
FIG. 2 is a diagram of illustrative user equipment in accordance with the present invention;
FIG. 3 is a diagram of an illustrative user input device in accordance with the present invention;
FIG. 4 is an illustrative display of a log-in (or authentication) page for the interactive media guidance application in accordance with the present invention;
FIG. 5 is an illustrative display of a search page in accordance with the present invention;
FIG. 6 is an illustrative display of a search results page in accordance with the present invention;
FIG. 7 is an illustrative display of a playlist page in accordance with the present invention;
FIG. 8 is an illustrative display of a media library page in accordance with the present invention;
FIG. 9 is a flow chart of an illustrative process for searching for content and placing the content in a media library in accordance with the present invention; and
FIG. 10 is a flow chart of an illustrative process for ordering content from the media library for playback in accordance with the present invention.

### Detailed Description of the Preferred Embodiments

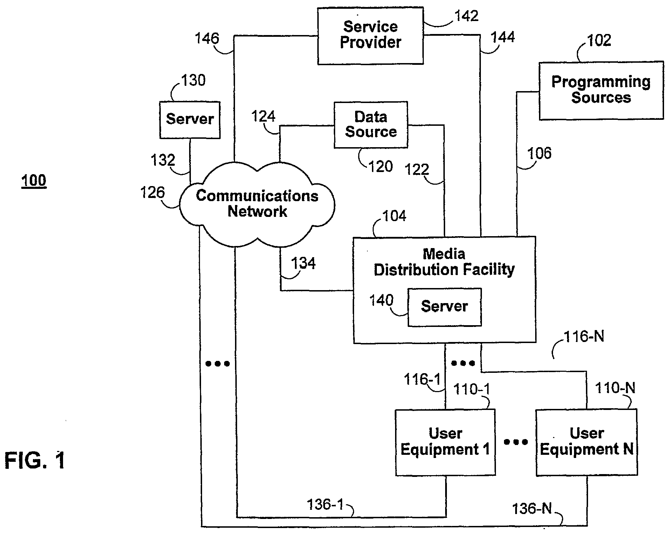

Illustrative interactive media system 100 in accordance with the present invention is shown in FIG. 1. Though the following description will primarily describe video and audio content, it will be understood that it applies to all types of media content. Media content (e.g., video, audio, gaming content, shopping application content, etc.) is provided from programming sources 102 to media distribution facilities, such as media distribution facility 104, using communications path 106. Programming sources 102 may be any suitable sources of television and music content, such as, for example, television broadcasters (e.g., NBC, ABC, and HBO), satellite radio broadcasters (Sirius, XM Satellite radio), Internet content sources, or other video or audio content sources.

Program schedule data and other data is provided from data source 120 to media distribution facilities (e.g., media distribution facility 104) using communications path 122. Data source 120 may include a program listings database having television program schedule information to be provided to an interactive media guidance application implemented on user equipment 110. The television program schedule information may include scheduled broadcast times, titles, channels, ratings information (e.g., parental ratings and critic's ratings), detailed title descriptions, genre or category information (e.g., sports, news, movies, etc.), and information on actors and actresses. Data source 120 may also be used to provide advertisements (e.g., program guide advertisements and advertisements for other interactive media guidance applications), real-time data such as sports scores, stock quotes, news data, weather data, application data for one or more interactive media guidance applications, and any other suitable data for use by system 100.

In some embodiments, there may be multiple data sources, such as data source 120, in system 100. For example, system 100 may include a data source associated with broadcast programming (e.g., advertisements, logo data for each broadcaster), a data source associated with pay-per-view (PPV) programming, and/or a data source associated with on-demand programming (e.g., video-on-demand (VOD) programming).

In some embodiments, data source 120 provides program schedule data and other data directly to user equipment 110 over path 124, communications network 126, and path 136 instead of providing the program schedule data to user equipment 110 via media distribution facility 104. Communications network 126 may be any suitable communications network, such as the Internet, a public switched telephone network, a private data network, or a packet-based network.

Media distribution facility 104 may be a cable system headend, a satellite television distribution facility, a television broadcaster, or any other suitable facility for distributing any suitable media content to users. Media distribution facility 104 may provide user equipment 110 with content received from programming sources 102 and program schedule data and other interactive media data received from data source 120 over communications path 116 using any suitable approach. For example, content may be provided to user equipment 110 in a broadcast, multicast, or unicast. Program schedule data and other data may be provided to user equipment 110 on a television channel sideband, in the vertical blanking interval of a television channel, using an in-band or out-of-band digital signal, or by any other suitable data transmission technique. Media distribution facility 104 may provide user equipment 110 with content, program schedule data, and other data on multiple analog or digital channels, and with any suitable frequency (e.g., continuously, daily, in response to a request from user equipment, etc.).

Media distribution facility 104 is connected to one or more user equipment 110-i (where i=1, ..., N) using communications path 116-i. Such user equipment 110 may be located, for example, in a user's home, in user's vehicles, in the user's offices, as part of the user's portable devices, or in any other suitable location. In some embodiments, user equipment 110 may not belong to the user (e.g., a public terminal).

User equipment 110 may be any suitable user device for accessing video content, audio content or interactive media guidance application features. In some embodiments, user equipment 110 may be configured to display web pages of an online interactive media guidance application and/or multimedia content. For example, user equipment 110 may be a portable device such as a mobile phone, personal digital assistant (PDA), BlackBerry™, portable television, laptop computer, I-Video device, portable media player, or any other suitable portable device. Other suitable types of user equipment 110 may include local user devices such as, for example, a user's home television equipment, DVR device, set-top box, home personal computer, or any other suitable local device. In some embodiments, user equipment 110 may be a non-local user device (e.g., a public or remote computer).

An interactive media guidance application implemented on user equipment 110, media distribution facility 104, or another device of system 100 may use the program schedule data and other interactive media data to display program listings and other information (e.g., information on digital music) for the user. Interactive media guidance application displays may be generated and displayed for the user using any suitable approach. For example, an interactive media guidance application implemented at least in part on media distribution facility 104 may generate and transmit application display pages to user equipment 110 for display, As another example, user equipment 110 may store data for use in one or more interactive television displays (e.g., program schedule data, advertisements, logos, etc.), and an interactive media guidance application implemented at least partially on the user equipment may generate the interactive television displays based on instructions received from media distribution facility 104.

In some embodiments, the interactive media guidance application may be implemented locally on user equipment 110. The interactive media guidance application may be any suitable application such as, for example, an interactive television program guide, a web browsing and other Internet service application, an on-demand application (e.g., video or audio on-demand application), a game application, a communication application (e.g., e-mail and chat), or any other suitable application. In some embodiments, the interactive media guidance application may be implemented in a distributed fashion (e.g., using a client-server architecture).. In some embodiments, interactive media guidance applications may be provided as separate applications that are accessed through a navigation shell application (e.g., a menu application with menu options corresponding to the applications). In some embodiments, the features of such applications may be combined.

In some embodiments, system 100 also includes server 130, server 140 (in facility 104), service provider 142, and/or other devices of system 100, which may be used to support interactive media guidance application functions including, for example, a network-based video recorder or a VOD application. For example, VOD content and video recorded using a network-based video recorder arrangement may be stored on server 140, server 130, or at service provider 142, and may be provided to user equipment 110 when requested by the interactive media guidance application.

In some embodiments, an online interactive media guidance application may be provided, for example, using a server (e.g., server 130) connected to communications network 126 over communications path 132. Server 130 may receive program schedule data and other data from data source 120 over communications path 124, communications network 126, and communications path 132, or over another suitable path or combination of paths.

In some embodiments, user equipment 110 may access the online interactive media guidance application over an Internet communications link. For example, user equipment 110-i may access the online interactive media guidance application implemented at least in part on server 130 through communications network 126 (e.g., using a cable modem) using communications path 136-i or through media distribution facility 104 using communications path 116-i.

There are typically may of each system component (e.g., programming sources 102, media distribution facilities 104, servers 130 and 140, data sources 120, service providers 142) in system 100, but only one of each is shown in FIG. 1 to avoid overcomplicating the drawing. For clarity of the description, FIG. 1 includes N user equipments 110 with corresponding communication paths 116 and 136. The various communications paths (e.g., paths 106, 116, 122, 124, 132, 134, 136, 144 and 146) of system 100 may be satellite paths, fiber-optic paths, cable paths, or any other suitable wired or wireless communications path or combination of such paths.

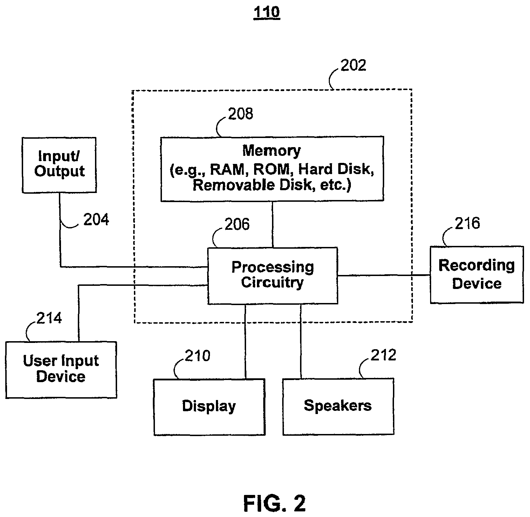

FIG. 2 shows illustrative components of user equipment 110 (FIG. 1). User equipment 110 includes control circuitry 202 (that includes processing circuitry 206 and memory 208), input/output (I/O) 204, display 210, speakers 212, user input device 214 and recording device 216. User equipment 110 may include any additional component, either as part of one of the aforementioned components or as a stand-alone component.

Control circuitry 202 includes any suitable processing circuitry 206 (e.g., one or more microprocessors, microcontrollers, digital signal processors, programmable logic devices). Processing circuitry 206 may also include tuning circuitry (e.g., one or more tuners to handle simultaneous watch and record functions or picture-in-picture (PIP) functions), analog decoders, MPEG-2 decoders or other digital video circuitry, decoding and encoding circuitry (e.g., for converting over-the-air or cable analog signals to MPEG signals for storage), or any other suitable tuning or video circuits. Control circuitry 202 also includes memory 208 (e.g., random-access memory (RAM), read-only memory (ROM), flash memory, hard drives, DVD drives, CD drives, and server arrays). Processing circuitry 206 may provide instructions to memory 208.

In some embodiments, control circuitry 202 may be configured to execute the operations of a Java™ application. The Java™ application may be initially configured in user equipment 110, or may be downloaded to user equipment 110 at a later time. The Java™ application may allow the user to control interactive media guidance application functions including, for example, playback functions (e.g., play, fast-forward, rewind, pause, or stop). For example, the Java™ application may be particularly useful in devices that have limited resources (e.g., a mobile phone, PDA, or BlackBerry™. Other application environments may also be supported, depending on the control circuitry capabilities.

In some embodiments, control circuitry 202 may be incorporated in a set-top box (e.g., an analog or digital set-top box, an integrated receiver decoder (IRD), a WebTV box). In some embodiments, control circuitry 202 may be incorporated in a personal computer coupled with a TV tuner card (e.g., a PCTV or mobile telephones with video and/or audio capabilities).

User equipment 110 communicates with system 100 through input/output (I/O) 204 using one or more communications paths (e.g., paths 116 and 136 of FIG. 1) leading to other devices of system 100. I/O 204 receives video and audio content (e.g., from programming sources 102, servers or other equipment such as server 130, service providers such as service provider 142, media distribution facility 104) and program schedule information and other data for an interactive media guidance application from data source 120. In some embodiments, I/O 204 may include communications circuitry such as a cable modem, an integrated services digital network (ISDN) modem, a digital subscriber line (DSL) modem, a telephone modem, a wireless modem, an Ethernet hub, a FireWire or USB port, or any other suitable I/O circuitry for communications with other equipment. In some embodiments, the communications circuitry may be components of control circuitry 202. The communications using this communications circuitry may involve the Internet or any other suitable communications networks or paths.

Processing circuitry 206 may direct the tuning circuitry and decoding and encoding circuitry to receive, display, play or record video or audio content. Control circuitry 202 may direct display 210 to display video content and audio component 212 to play audio content. Audio component 212 may include speakers, ear buds, headphones, or any other suitable component (e.g., for personal or public listening). Display 210 may be a monitor, a television, a liquid-crystal display (LCD) screen, or any other suitable equipment for displaying visual images. Audio component 212 may be provided as part of user equipment 110 (e.g., display device 210) or may be a stand-alone unit.

In some embodiments, control circuitry 202 may play back a video by initiating a Java™ applet to perform the playback operations and other interactive media guidance application operations. In some embodiments, the applet may be programmed using any programming language or scheme. The user may select the program for playback in any suitable manner using the applet including, for example, entering a code that identifies a particular program (e.g., a code from a guide identifying a VOD program, a code identifying a program recorded on recording device 216, or a code identifying a broadcast channel), selecting the program from listings (e.g., listings displayed on display device 210), or any other suitable manner. In some embodiments, the user may use a first instance of user equipment 110 to instruct the interactive media guidance application (e.g., the applet) to playback a program on another instance of user equipment 110.

Control circuitry 202 is connected to recording device 216, which may be used to record video and audio content received by control circuitry 202. Recording device 216 may be a digital video recorder (DVR), personal video recorder (PVR), a DVD recorder, a video cassette recorder (VCR), a hard disk, flash memory, or any other device or devices with storage capabilities. In some embodiments, recording device 216 may be incorporated in user equipment 110 (e.g., as part of control circuitry 202), a stand alone device, or incorporated in another suitable device of system 100. In some embodiments, control circuitry 202 may direct recording device 216 to perform any suitable operation.

In some embodiments, recording device 216 may include communications circuitry such as a cable modem, an ISDN modem, a DSL modem, or a telephone modem for communications with other equipment. Such communications may involve the Internet or any other suitable communications networks or paths.

A user may control user equipment 110 (e.g., control circuitry 202, display device 210, speakers 212, recording device 216) using user input device 214. User input device 214 may be any suitable user interface, such as a mouse, trackball, keypad, keyboard, touch screen, touch pad, voice recognition interface, remote control, or any other suitable user input device. In some embodiments, user input device may be incorporated in another component of user equipment 110 (e.g., display device 210, recording device 216). User input device 214 may communicate with user equipment 110 by any suitable means including, for example, infrared, wired or wireless communications paths.

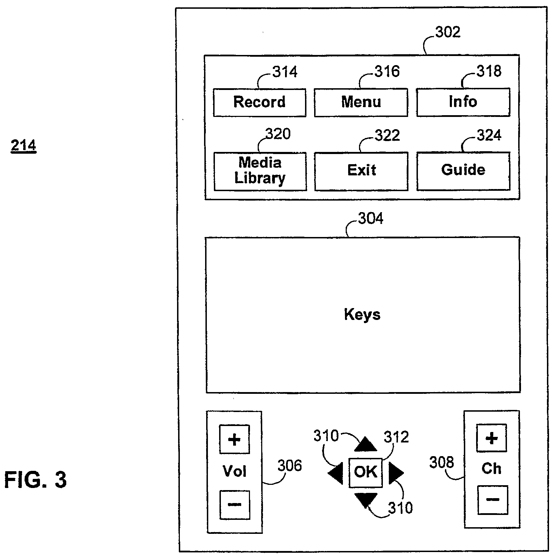

FIG. 3 shows illustrative user input device 214 for operating user equipment 110 (FIG. 1). User input device 214 is only illustrative and any other suitable user input interface may be used to operate user equipment 110 (e.g., a mouse, trackball, keypad, keyboard, touch screen, voice recognition system). User input device 214 includes function keys 302 and other keys 304 such as keypad keys, power on/off keys, pause, stop, fast-forward and reverse keys. Volume up and down keys 306 may be used for adjusting the volume of the audio portion of a video. Channel up and down keys 308 may be used to change television channels and to access content on virtual channels. Cursor keys 310 may be used to navigate on-screen menus. For example, cursor keys 310 may be used to position an on-screen cursor, indicator, or highlight (sometimes all generically referred to as a highlight or highlight region) to indicate interest in a particular option or other item on a display screen that is displayed by the interactive media guidance application.

An OK key 312 (sometimes called a select or enter key) may be used to select on-screen options that the user has highlighted. Keys 302 may include a RECORD key 314 for initiating recordings. MENU button 316 may be used to direct the interactive media guidance application to display a menu on the user's display screen (e.g., display device 210). INFO button 318 may be used to direct the interactive media guidance application to display an information display screen. For example, when a particular program listing in an interactive television program listings display screen is highlighted, the user pressing INFO button 318 may cause the interactive media guidance application to provide additional program schedule information associated with that program listing (e.g., a program description, actor information, etc.).

MEDIA LIBRARY button 320 may be used to access the user's media library. Alternatively, the user may also navigate to the user's media library through the guide. EXIT button 322 may be used to exit the interactive media guidance application or to exit a portion of the interactive media guidance application. GUIDE button 324 may be used to invoke an interactive television program guide (e.g., a program guide menu page, program listings page, or other interactive media guidance application page).

The keys shown in FIG. 3 are merely illustrative. Other keys or buttons may be provided if desired. For example, the user input device may include MUSIC, PLAYLISTS, BACK, SEARCH, FIND, EDIT, DVR, VOD, or other suitable keys. Alphanumeric buttons, including other keyboard keys (e.g., SHIFT, CONTROL), may be used to enter alphanumeric characters. A LAST or BACK button may be used to browse backwards in the interactive media guidance application (e.g., to return to a previous channel, web page or other display screen). Video recorder function buttons such as a play, pause, stop, rewind, fast-forward and record buttons, may be used to control video recorder functions (local or network-based) in system 100 (FIG. 1). A help key may be used to invoke help functions such as context-sensitive on-screen help functions.

In some embodiments, the user may direct the interactive media guidance application to search for content with a user device. For example, the user may enter search terms by scrolling though the alphabet, typing the letters from alphanumeric keys, an on-screen keyboard, or any combination thereof. The user may search for any suitable content including, for example, broadcast programs, pay-per-view (PPV) programs, video-on-demand (VOD) programs, DVR recordings, video clips, audio clips, or any other suitable content. The user device may be any suitable device including, for example, a device configured only to search for content, a device configured to search for and play back content, or any other suitable user device. The user may select some of the search results and add them to a "media library."

In some embodiments, the user may access a search web page using an online interactive media guidance application. Upon entering search terms, the online interactive media guidance application may provide a search results web page for the user. The user may select some of the search results from the search results web page and add them to a media library web page.

The "media library" is a collection of content (video and/or audio) and/or bookmarks to content selected by a user. In some embodiments, the "media library" may be saved in system 100 at a location outside of the user device so as to be accessible by the user on any user device the user may have in interactive media system 100. In some embodiments, the media library may be located in a user device (e.g., a user device that is accessible to other user devices). The user may access the media library and download its contents to any suitable user device. The user may then play back the content using the user device to which the content was downloaded.

To access the interactive media guidance application, or certain interactive media guidance application features (e.g., search page, media library), the user device, in response to a user instruction, may log in or authenticate itself to a device of system 100 (e.g., media distribution facility 104, server 130). Upon the log-in or authentication, the user device may access data saved by and for the user including, for example, prior searches, the media library, and other data. The data may be stored on any device of system 100 (e.g., media distribution facility 104, server 130). In some embodiments, the user device may automatically log-in or authenticate itself to access the interactive media guidance application features. For example, the user device may automatically send its information (available from a previous log-in or authentication of the user) over a communications path to the appropriate device of system 100 and access the interactive media guidance application features. In some embodiments, the interactive media guidance application may prompt the user for log-in or authentication information (e.g., when the user accesses an online interactive media guidance application using a public computer).

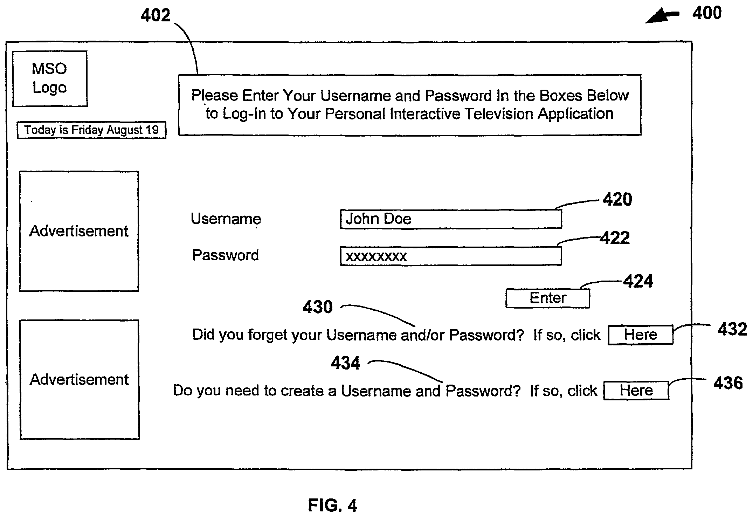

FIGS. 4-8 show illustrative interactive media guidance application pages. The pages may be displayed to the user as part of an interactive media guidance application accessed over a suitable communications link. Alternatively, web pages may be displayed to the user as part of an online interactive media guidance application accessed over an Internet communications link. Although FIGS. 4-8 are shown and described herein primarily in the context of illustrative interactive media guidance application pages for clarity, any other suitable pages may be used.

In some embodiments, the interactive media guidance application pages may be provided to the user in simplified format (e.g., for user devices having limited resources). For example, a simplified page may provide certain selectable options in additional pages or menus. In some embodiments, the interactive media guidance application may play back content to the user device in a simplified format (e.g., for user devices having limited resources). There may be any number of different simplified formats for interactive media guidance application pages and content. In some embodiments, the interactive media guidance application may provide the user with an option for switching from a simplified to a standard format of a page or content.

In some embodiments, the interactive media guidance application may identify the resources available to each user device (e.g., display capabilities, bandwidth, memory, processing power, or download time) and select standard or simplified pages and content depending on the resources identified. For example, if the interactive media guidance application determines that a particular user device has a small screen size, a small amount of memory, a processor with limited capabilities, or any other limited resource (e.g., mobile phones, portable media players as compared to television equipment, personal computers, etc.), the interactive media guidance application may automatically direct the particular user device to display simplified pages and content. In some embodiments, the user may be prompted to select whether to display the standard or simplified pages and content.

FIG. 4 shows illustrative log-in (or authentication) page 400 that the interactive media guidance application may display on user equipment 110. The user may access page 400 by any suitable means including, for example, pressing a MENU, GUIDE, or other suitable key or key sequence on user input device 214, navigating from another interactive media guidance application screen (e.g., when navigating from a public screen to a user-specific or private screen), or by any other suitable means.

Page 400 includes information section 402 that provides instructions for the user to enter his username and password to log in (or authenticate) to the interactive media guidance application. The user may use a user input device (e.g., user input device 214) to enter his user name in a username box (e.g., box 420) and his password in a password box (e.g., box 422). The user may submit the username and password using a submit option (e.g., box 424). In one embodiment, user log-in may be based on ownership of devices. For example, once a user has logged into a particular device (e.g., a PC), the user may bypass additional log-in/identification procedures for applications (e.g., a music download program) executing on that particular device that has already properly identified the user, or other devices connected thereto (e.g., a portable media player). A data packet, e.g., a cookie, may be utilized for a particular device such that once the user has been properly identified and logged in, applications executing on and attached devices to the particular device need no further log-in and/or authentication. Page 400 includes an option (e.g., button 432) that the user may select if the user has forgotten his username and/or password, as indicated by description 430. In response to selecting the forgotten username/password option, the interactive media guidance application may transmit the appropriate username and password to the user (e.g., by e-mail, regular mail, text message, telephone). Page 400 includes an option (e.g., button 436) for creating a new user account, as indicated by description 434. In response to selecting the "new user account" option, the interactive media guidance application may prompt the user to create a new username and password, which may be transmitted to the appropriate device of system 100 (e.g., media distribution facility 104, server 130).

When the user creates a new account, the interactive media guidance application may prompt the user to identify all user devices (including the current device) that the user may use to access interactive media guidance application features. In some embodiments, the interactive media guidance application may automatically search for user devices in the neighborhood of the current user device (e.g., by broadcasting notices (e.g., pinging) and requesting replies identifying the particular user device). For example, if the user authenticates with a home television device, the interactive media guidance application may search for other nearby devices (e.g., devices connected to the user device) such as, for example, a recording device, a home computer, or any other device. In some embodiments, the user may identify particular user devices to the interactive media guidance application by entering the appropriate device information (e.g., device type, serial number, registration number, phone number (for a cell phone), communications link for connecting to the device) with a user input device (e.g., user input device 214). In some embodiments, when the user authenticates to the user account using a new device, the interactive media guidance application may add the device to the list of known user devices associated with the account. This may be done automatically or the user may be given the opportunity to add the device to the list.

The interactive media guidance application may transmit username and password data entered by the user to the appropriate device of system 100 (e.g., media distribution facility 104, server 130), which may in turn compare data to authentication data (e.g., previously set username and password combinations stored in the device) to authenticate the user. Once the user has been authenticated, the interactive media guidance application may display pages for interactive media guidance application features that are specific to the user (e.g., pages in which the user preferences are applied, pages from which the user may save content). In some embodiments, the interactive media guidance application may display a listings page to the user.

The user may select any type of media content to add to a media library (described in more detail below). For example, the user may select content from a grid display or listings of content. The interactive media guidance application may provide the user with pages that include listings of programs by category, genre, A-Z listings, favorite channel and/or program listings, recommendations (e.g., from tvguide.com, experts, friends, similar interest groups, "most popular" listings, etc.), or any other listings page.

As another example, the user may receive an e-mail, short message service (SMS) message, or any other message that identifies content. For example, the message may include a bookmark to a program or to information regarding a program. As another example, the message may include listings of content. The user may then add the content from the message to the media library by selecting the bookmark or listing, copying and pasting the name of the content (e.g., to search for the content of the message), or any other suitable approach for adding the content to the media library. In some embodiments, the content provider may monitor the content that is placed in a user's media library and send pre-emptive messages to one or more user devices that recommended content based on the user's history and content placed in the media library. In addition, the content provider may update or clarify content recommendations based on which content the user selects from the pre-emptive messages for the media library. Each time the user selects particular recommended content, the content source identifies the attributes of the selected recommended content and provides additional recommendations for content similar to the selected content.

As another example, the user may directly enter information identifying particular content (e.g., a movie title) that is to be added to the media library. For example, a user may walk by a movie theater and notice that the movie "Aeon Flux" is playing. The user may then decide to add the movie to his media library. Instead of having to wait until the user gets home to access the media library with his television equipment, the user may use a cellular telephone and send a message (e.g., a text message) to the interactive media guidance application instructing it to add the movie "Aeon Flux" to the media library. The interactive media guidance application may then search for the movie "Aeon Flux," and add the movie, when it is found, to the media library. If the movie "Aeon Flux" is not yet available, the interactive media guidance application may add a placeholder bookmark for the movie.

As still another example, the user may select content from an advertisement displayed by the interactive media guidance application, by a web page, or by any other means and on any suitable user device. In response to a user selection of the advertisement, the advertisement itself, and/or the content being advertised may be added to the media library (discussed in more detail below).

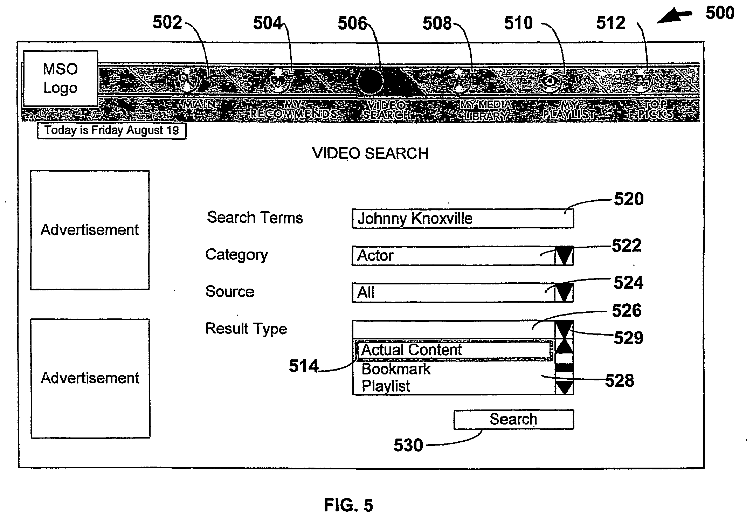

Alternatively, the user may search for content to add to the media library. FIG. 5 shows illustrative search page 500 that the interactive media guidance application may display on user equipment 110. The user may access search page 500 by any suitable means such as, for example, pressing a SEARCH, FIND, or other suitable key or key sequence on user input device 214, navigating from another interactive media guidance application screen or menu (e.g., by selecting Video Search button 506), or by any other suitable means. In some embodiments, the interactive media guidance application may display the search page after authenticating the user.

Page 500 includes navigation buttons 502, 504, 506, 508, 510 and 512. The user may select "Main" button 502 to access the main page of the interactive media guidance application. The user may select "My Recommends" button 504 to view recommended programs and other content selected based on the user's preferences. The user may search for content by selecting "Video Search" button 506. The user may view the contents of the user's media library by selecting "Media library" button 508. The user may view his playlists by selecting "Playlist" button 510. The user may view the top picks as determined by the interactive media guidance application by selecting "Top Picks" button 512. The interactive media guidance application may indicate the user's location in the guide by marking the button corresponding to the location. For example, button 506 is marked with a different color in search page 500. Other suitable markings may include, for example, placing a border around the button, changing the font of the button, displaying an icon by the button, or any other suitable marking.

The user may search for a program by entering search terms in search box 520 using the user input device (e.g., user input device 214). The user may search for a particular program, actor, broadcast date, broadcast time, release year, genre, rating, keyword sequence, or any other suitable search term. In the example shown in FIG. 5, the user has entered the search terms "Johnny Knoxville." In some embodiments, the user may enter search terms by typing in the terms using alphanumeric keys on the user input device (e.g., the keyboard of a computer, the keypad of a mobile phone or remote control, on-screen keyboard as input device, etc.). In some embodiments, the user may enter the search terms by scrolling through the letters of the alphabet using the directional keys of a user input device. In some embodiments, the user may select search terms from another interactive media guidance application screen. For example, the user may view a listing or description of a program, highlight or select terms from the listing or program description (e.g., a program title, actor name, etc.), copy the selected terms, and paste them in the search page.

In some embodiments, the user may select search options to narrow the search. The search options may include, for example, category, source, result type, and any other suitable search option or combination of search options The options may provide additional information related to 1) the search term such as the identify of the search term (e.g., name, date) or 2) the search parameters (e.g., what sources to search, what dates to search).

Page 500 shows three illustrative search options: category option, source option, and result type option. The user may enter a category option in a "category" box (e.g., box 522). Suitable category options may include, for example, actor, program title, broadcast date, broadcast time, release year, genre, rating, program description, or any other suitable option. The user may also identify the sources to search in a "source" box (e.g., box 524). Suitable sources may include, for example, recording devices, VOD servers, network video recorders, the Internet, DVR devices, PVR devices, VCR devices, cable headends, a specific recording device of the user equipment, a device or devices at a specific location in system 100, or any other suitable sources. The user may further specify the result type to search for in a "result type" box (e.g., box 526). Suitable result type options may include, for example, actual content, bookmarks to actual content, playlists, free content, content for sale, PPV programs, VOD programs, broadcast programs, or any other suitable option.

In some embodiments, the user may enter options in one or more search options (e.g., entering an option for only the category option). In some embodiments, the user may select more than one option within each search option (e.g., by selecting multiple options in the category option using a SHIFT or CONTROL key). In some embodiments, the default options may be "all." The user may select an option in any suitable manner including, for example, entering the option using alphanumeric keys from the user input device, selecting the option from a pull-down menu (e.g., pull-down menu 528), a list or from another interactive media guidance application page, or any other suitable manner. For example, the user may display pull-down menu 528 by selecting arrow 529. The user may view additional options by scrolling up or down in the menu. To select an option from pull-down menu 528, the user may highlight the option with highlight region 514.

In the example shown in FIG. 5, the user has selected the "Actor" category option (box 522), the "All" source (box 524), and the "Actual Content" result type (box 526).

In some embodiments, the search page may include multiple search boxes coupled by logical operations. For example, the search page may include two or more search boxes coupled by a user specified operator such as and, or, not, or any other suitable operator. The search page may allow the user to perform complex, or Boolean, searches (e.g., "Knoxville" 'and' "Simpson"). In some embodiments, the user may select recording options for each of the search terms entered.

In some embodiments, the user may enter a string of search terms that includes logical connectors in search box 520. The interactive media guidance application may be configured to parse the search string, extract the connectors from the search terms and find content corresponding to the search string. For example, the user may enter the search string "Knoxville and Simpson and movies" to search for movies starring Johnny Knoxville and Jessica Simpson. In some embodiments, the user may select category, source and result type options for the search phrase. In some embodiments, the user may include category, search and result type options in the search phrase. For example, the user may enter the phrase "actor=Knoxville and actor=Simpson and source=Internet and result type=actual content." Such a search may return, for example, video clips, trailers or full length video of movies starring Johnny Knoxville and Jessica Simpson that were found on the Internet.

Once the user has entered search terms and options, the user may select a "search" option (e.g., "search" button 530) to perform the search. In the example shown in FIG. 5, the user has entered the search term "Johnny Knoxville," and selected the "actor" category, the "all" source, and the "actual content" result type. The interactive media guidance application may search for content corresponding to the user's search terms and display the search results for the user.

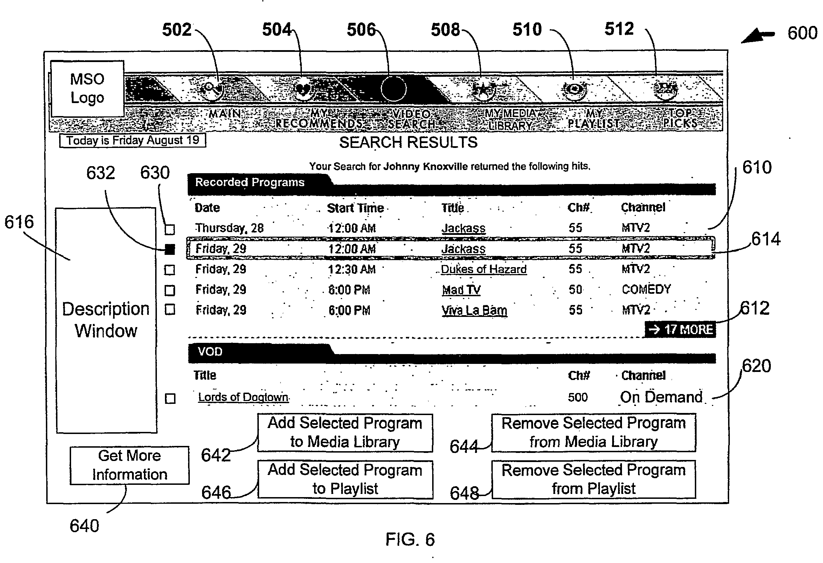

The interactive media guidance application may display search results in a search results page. FIG. 6 shows an illustrative search results page 600 that includes listings of search results corresponding to the search terms entered on page 500. Search results page 600 includes listings 610 and 620 of programs. The listings may be ordered by source, alphabetically by title, by air date, by recording date, in the order they were found, or in any other suitable order. In the example shown in FIG. 6, recorded program listings 610 includes programs located on recording devices and VOD listings 620 includes programs available to the user as VOD programs. In some embodiments, the search page may include listings from other sources (e.g., the Internet, television system headend, etc.) depending on the user's options set on search page 500 and the content found by the search. Recorded program listings 610 include the date the program was recorded, the start time of the program, the program title, and the channel number and name. VOD listings 620 include the program title and the channel number and name. In some embodiments, listings 610 and 620 may include other information such as, for example, actor names, rating, short description, cost, recording quality, program size, program length, or any other suitable information or combination thereof.

Listings 610 and 620 may indicate how many hits were found in each content source. In the example shown in FIG. 6, recorded program listings 610 include 5 hits displayed, but also includes button 612 that indicates to the user that there are 17 more hits found in recording devices. The user may select button 612 to display the listings for the additional 17 hits. In the example shown in FIG. 6, VOD listings 620 include only 1 hit.

A user may select a listing with highlight region 614 to view more information about the program associated with the listing, to order the program (e.g., for a VOD program), to play back the program, to receive a reminder or an e-mail notification for the program (e.g., for a broadcast program before the program is about to air), to automatically record the program, to receive a notification when the program has been recorded, or to perform any other suitable action. In response to receiving a user request to view program information, the interactive media guidance application may display the program information on the screen, for example, in window 616 or in full screen. In some embodiments, the program information may include video and/or audio clips. In response to receiving a user request to play back the program, the interactive media guidance application may display the program, for example, in window 616 or in full screen.

In some embodiments, the search results may include results associated with content that is not yet available. For example, the search results may include advertisements for future programs (e.g., movie trailers), titles of future programs (e.g., found from lists of movie, music, or program projects), or other suitable results for future content.

To download or order content, the user may highlight the listing associated with the program and select an "add selected program to media library" option (e.g., button 642). In some embodiments, the interactive media guidance application may visually mark the selected program as being added to the media library. For example, the interactive media guidance application may fill a box (e.g., box 632) to indicate that the program associated with the listing was added to the media library. The interactive media guidance application may leave a box empty (e.g., box 630) to indicate that the listing associated with the program has not been added to the media library. The interactive media guidance application may mark listings in any suitable way including, for example, changing the color of the listings, changing the font of the listing, adding an icon, checking a box, or using any other suitable mark. To remove a previously selected program from the media library, the user may highlight the listing associated with the program and select a "remove selected program from media library" option (e.g., button 644).

In some embodiments, instead of filling a box to indicate that a program has been added to the media library, the user may select the box (e.g., box 630) associated with the program without adding the program to the media library. In response to receiving the selection of the box, the interactive media guidance application may fill the box (e.g., box 632) to indicate that the program is selected. To unselect a program, the user may highlight and select the filled box associated with the program to clear the box. The user may add the selected programs to the media library by selecting the "add selected program to media library" option (e.g., button 642).

In some embodiments, the user may select content from the search results to add to a new or existing playlist. For example, the user may select programs as described above, and select an "add selected program to playlist" option (e.g., button 646). The user may also remove programs from a playlist. For example, the user may select the programs as described above, and select a "remove selected program from playlist" option (e.g., button 648). In some embodiments, the search results page may include an option for adding playlists to the media library (not shown). In some embodiments, the interactive media guidance application may provide existing playlists for the user. For example, the interactive media guidance application may provide a playlist of recommended content identified based on the user's profile and viewing history, a playlist of recommended programs based on popular programs as identified by a content provider, a celebrity playlist (e.g., an iTunes playlist). As another example, the interactive media guidance application may provide the user with generic playlists (e.g., based on genre), or any other suitable playlist. The user may modify existing or proposed playlists to personalize their content.

In some embodiments, the user may upload content to the media library by searching for content on specific user equipment or other sources (e.g., the user's DVR device) and placing the content found in the search in the media library. In some embodiments, the interactive media guidance application may provide the user with a selectable option to upload the content of a specific source (e.g., a DVR device) to the media library.

In some embodiments, if the user finds an advertisement (or the content associated with an advertisement) from the search results desirable, the user may select the advertisement and place it in the media library. In some embodiments, the interactive media guidance application may, automatically or in response to a user instruction, find and place the content associated with the advertisement in the media library.

In some embodiments, if the user finds future content from the search results desirable, the user may select the search result associated with the future content and instruct the interactive media guidance application to monitor content sources for the future content (e.g., by adding the search result to the media library). The interactive media guidance application may then notify the user (e.g., with a message or reminder in the interactive media guidance application, or an e-mail message) when the content becomes available. In some embodiments, the interactive media guidance application may automatically obtain (e.g., download or record) the content when it becomes available for the user, for example by placing the content in the media library. In some embodiments, when the content becomes available, the interactive media guidance application may prompt the user for instructions on whether to obtain the content.

In some embodiments, a user may select a broadcast advertisement (e.g., movie trailer) for future or available content to instruct the interactive media guidance application to add the advertisement or the content associated with the advertisement to the media library. If the content is not yet available, the interactive media guidance application may monitor content sources for the content.

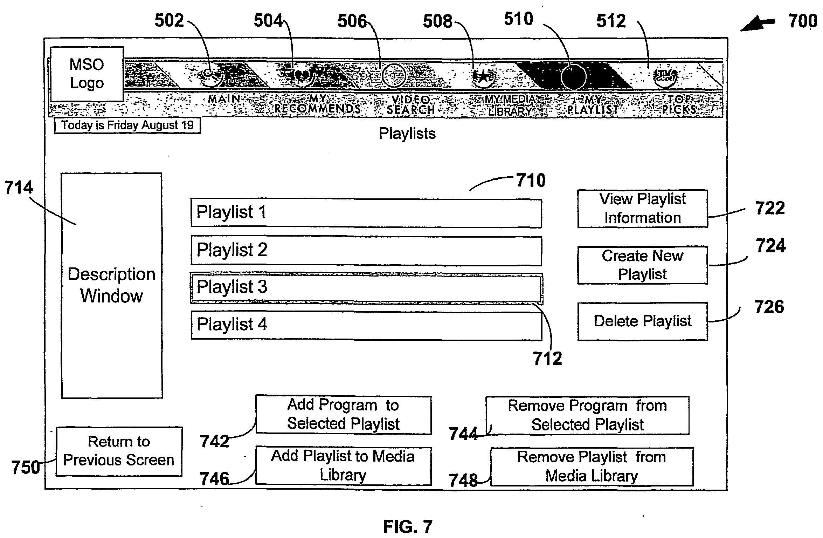

In some embodiments, in response to a user instruction to add or remove programs from a playlist, the interactive media guidance application may display a playlists page. The user may access the playlists page by any other suitable means including, for example, pressing a PLAYLIST or other suitable key or key sequence on user input device 214 (not shown in FIG. 3), navigating from another interactive media guidance application screen or menu (e.g., by selecting playlists navigation button 510), or by any other suitable means. FIG. 7 shows illustrative playlist page 700. In some embodiments, the interactive media guidance application may indicate to the user that the playlist page is displayed by marking the playlists navigation button (e.g., button 510).

Playlist page 700 includes playlist listings 710, which the user may select using highlight region 712. Listings 710 include the playlist name, which may be a generic name (e.g., playlist 1, 2, 3, 4) or a user defined name. In some embodiments, the playlist listings may include additional information such as, for example, programs in the playlist, number of programs, program types, or any other suitable information. In some embodiments, the interactive media guidance application may display additional information related to a selected playlist in response to a user selection of a "view playlist information" option (e.g., button 722). For example, the interactive media guidance application may display the information in window 714, in a full screen display, or in any other suitable display. In some embodiments, the playlist information may include video and/or audio content (e.g., recorded clips or broadcast content). Playlist page 700 may also include options for creating new playlists (e.g., button 724) and deleting existing playlists (e.g., button 726).

In some embodiments, the user may add or remove one or more programs (e.g., programs previously selected on search results page 600) to a particular playlist by highlighting the listing associated with the particular playlist and selecting an "add program to selected playlist" option (e.g., button 742) or a "remove program from selected playlist" option (e.g., button 744). In some embodiments, after adding or removing programs from a playlist, the interactive media guidance application may display the page where the user selected the programs (e.g., page 600). In some embodiments, the interactive media guidance application may add search results for content that is not yet available to a playlist. When the content becomes available, the interactive media guidance application may replace the search result with the content.

In some embodiments, the user may add or remove a playlist (and all of its programs) to the media library by highlighting the listing associated with the particular playlist and selecting an "add playlist to media library" option (e.g., button 746) or a "remove playlist from media library" option (e.g., button 748). In some embodiments, the user may return to the previous page (e.g., search results page 600) by pressing a BACK key or other suitable key or key sequence on user input device 214.

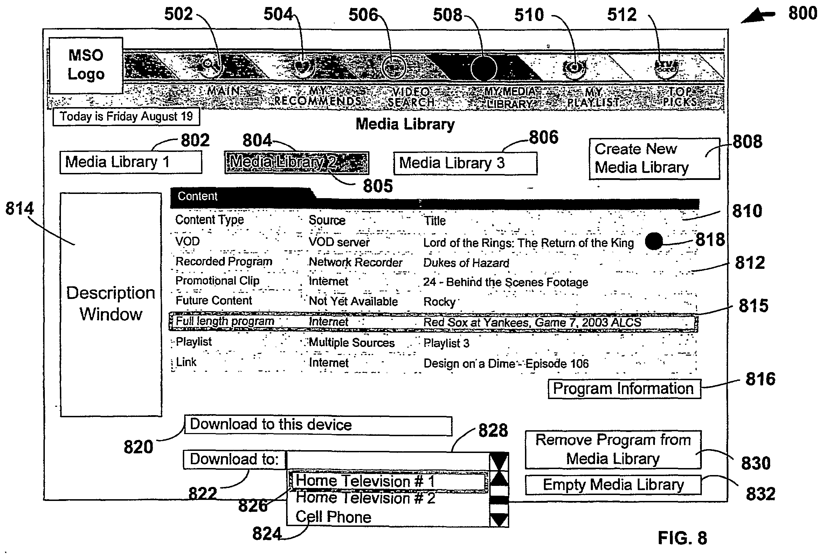

The user may view programs that have been added to the media library by accessing a media library page. The user may access the media library page by any suitable means such as, for example, pressing a MEDIA LIBRARY key (e.g., key 320) or other suitable key or key sequence on user input device 214, navigating from another interactive media guidance application screen or menu (e.g., by selecting media library navigation button 508), or by any other suitable means. FIG. 8 shows illustrative media library page 800. In some embodiments, the interactive media guidance application may indicate to the user that the media library page is displayed by marking the media library navigation button (e.g., button 508).

Media library page 800 includes listings 810 of content placed in the media library. The listings may be advertisements, video clips, audio content, or any other suitable content that a user may add to the media library. Listings 810 include the content type, source and title of the content. The listings may include any other suitable information such as, for example, actor names, ratings, program descriptions, recording quality information, recording options, broadcast date, recording date, when the program is available, program size, program length, or any other suitable information or combination of information.

In some embodiments, listings 810 may include listings for content that is not yet available. In some embodiments, the listings associated with future content (e.g., search results for future content) may include an indication that the content is not yet available (e.g., the source entry for "Rocky"). In some embodiments, the interactive media guidance application may mark the listing when the content becomes available to indicate the availability to the user (e.g., icon 818 indicates that the movie "Lord of the Rings," which was previously unavailable, is now available as a VOD offering).

In some embodiments, media library page 800 may include a separate notice or listing for content that is not yet available. When content becomes available, the interactive media guidance application may remove the entry for that content from the separate notice and add a new entry associated with that content in listings 810 for the user to select.

In some embodiments, the user may display additional information related to a program by highlighting the listing (e.g., with highlight region 812) associated with the program and selecting a "program information" option (e.g., button 816), pressing an INFO key or key sequence on the user input device, or by any other suitable means. For example, the interactive media guidance application may display the information in window 814, in a full screen display, or in any other suitable display. In some embodiments, the playlist information may include video and audio content (e.g., recorded clips or broadcast content).

In some embodiments, the user may remove content from the media library by highlighting the listing associated with the content (e.g., using highlight region 815) and selecting a "remove from media library" option (e.g., button 830), and empty the media library by selecting an "empty media library" option (e.g., button 832).

In some embodiments, the user may access the media library with a user device to play back content on the same user device (which may be different than the user device with which content was added to the media library). The user may, using the user device, access media library page 800, highlight the listing associated with available content (e.g., using highlight region 815), and select a "download to this device" option (e.g., button 820). In response to receiving the instruction to download the content, the interactive media guidance application may direct the user device to connect to the appropriate content source and download the content. In some embodiments, the interactive media guidance application may automatically download items placed in the media library to one or more user devices (e.g., "Ready to Go" option). This option may be enabled by the user only for content that satisfies user or system defined conditions (e.g., only automatically download sporting events).

In some embodiments, each user may have more than one media library. Media library page 800 may include options for each of the user's media libraries (e.g., buttons 802, 804, 806). Each option for a media library may be identified by a generic name (e.g., media library 1, 2, 3) or a user-defined name. The interactive media guidance application may indicate to the user the selected media library by marking the associated media library option using any suitable marking (e.g., a different color option 805). In some embodiments, the interactive media guidance application may display listings for only the selected media library. In some embodiments, the interactive media guidance application may display listings for all of the media libraries, where the listings for each media library are distinguished in any suitable manner (e.g., separately grouping the listings for each media library, visually distinguishing the listings in different media libraries, or any other suitable marking). Media library page 800 may also include an option for creating new media libraries (e.g., button 808).

The user may share the content of one or more media libraries with other users. For example, the user may download content to a device that other users may access as well. As another example, the user may download content to devices belonging to other users (e.g., via e-mail, file transfer protocol, entering their device information, etc.). As still another example, the user may allow other users access to his media library. In some embodiments, the user may provide read-only rights to other users, or may protect (e.g., with a password), write and/or other full access rights. The user may also limit the content available to another user (e.g., only allow specific content to be viewed). The rights given to other users may be temporary (e.g., by removing a password once a user has accessed the media library). In some embodiments, allowing another user to access the media library may require a fee, paid by either or both the owner of the media library, or the user wanted to access another's media library.

The user may request that the interactive media guidance application automatically fill up one or more user devices with all of the content stored in one or more media libraries (e.g., selecting a "fill-up" option). A user may use this option to maximize the content stored by a particular portable user device prior to a trip (e.g., fill a portable media player prior to beginning a business trip).

In some embodiments, the user may access the media library page with a first device to play back content on a second user device (both of which may be different than the user device with which content was added to the media library). The user may, using the first user device, access media library page 800, highlight the listing associated with available content (e.g., using highlight region 815), specify the device or devices to which to download the content (e.g., the second user device), and select a "download content" option (e.g., button 822). In response to receiving the instruction to download the content, the interactive media guidance application may direct the second user device to connect to the appropriate content source and download the content.

The user may select the user devices to which to download the content in any suitable manner including, for example, selecting user devices from pull-down menu 824 with highlight region 826, selecting user devices from a list of user devices, inputting the user devices directly (e.g., with user input device 214), or in any other suitable manner. The interactive media guidance application indicates in box 828 the device or devices to which the content is downloaded.

In some embodiments, the user may select an advertisement (e.g., a trailer) from listings 810 for download. In some embodiments, in response to the download request, the interactive media guidance application may download the content associated with the advertisement, if available, instead of the selected advertisement. For example, instead of downloading a trailer for a movie, the interactive media guidance application may download a VOD or PPV offering of the full-length movie. In some embodiments, the interactive media guidance application may prompt the user to select either the advertisement or the actual content for downloading.

The interactive media guidance application may play back the selected content on the selected user device while it is downloading, or may instead wait until the download is complete before starting playback. In some embodiments, when the content is a bookmark, the interactive media guidance application may download the bookmark. In response to receiving a playback request, the interactive media guidance application may receive and display a content stream or tune to a channel providing the content to which the bookmark was directed.

In some embodiments, the content selected by the user may be a playlist. In some embodiments, the interactive media guidance application may download the selected playlist as a collection of bookmarks to the content of the playlist. In some embodiments, the interactive media guidance application may download the actual content that the playlist bookmarks to (e.g., download the playlist content from their respective sources).

In some embodiments, downloading content may require the user to purchase the content, if the content is offered for a fee (e.g., PPV programs, VOD programs, etc.). In some embodiments, the user may download the content for free, but may be required to purchase the content to play it back. This embodiment may allow a user to download content to a particular user device (e.g., the user's home television equipment), but only pay for the content that the user actually plays back, thus facilitating impulse purchases of content by eliminating the lapse of time between the user's instruction to purchase the content and the completion of the download of the content. In such embodiments, the content may be provided to the user device in encrypted form. The interactive media guidance application or playback device may receive a key for decrypting the content after the user has paid a fee. For users buying one or more items of content, the interactive media guidance application may provide discounts.

To purchase content, the user may provide personal information (e.g., account number, pin, and/or credit card information) to verify the user's identity and account status. In some embodiments, the interactive media guidance application may verify the information entered by the user with the user's equipment. In some embodiments, the interactive media guidance application may provide the information to a device outside of the user's equipment (e.g., a content source or a third party order fulfillment processor) for verification. Once the user's information has been verified, the content source may release the selected content to the user for download or playback.

The following example will serve to illustrate the feature of accessing the media library with a first user device and downloading content to a second user device. For example, a user may, during a break at work, decide to search for content having Johnny Knoxville as an actor. The user may access the search web page (e.g., search page 500) of an online interactive media guidance application over the Internet using a personal computer, and enter the appropriate search terms. After receiving the search terms and searching for content, the interactive media guidance application may display a list of search results in a search results web page (e.g., search results page 600). The user may then select some of the search results from the list of search results (e.g., Dukes of Hazard) to add to the media library. Because the user is at work and cannot play back the content while working, the user may decide to send the content of the media library to the user's home television equipment for viewing that evening, when the user gets home from work. The user may then navigate to the media library web page (e.g., using navigation button 508), select some or all of the content in the media library, select the home television equipment as the destination for the content, and instruct the online interactive media guidance application to download the selected content to the home television equipment.

As another example, instead of downloading the content to the user's home television equipment, the user may download a bookmark to the content. Then, when the user selects the bookmark that was downloaded with the home television equipment, the content may be accessed and played back remotely (e.g., from a central server, a VOD server, or a network recording device).

As still another example, a user may decide to search for particular content using a mobile phone. The user may access the search page (e.g., search page 500) from a server (e.g., a web-based server) and enter the appropriate search terms. After receiving the search terms and searching for content, the interactive media guidance application may display a list of search results in a search results page (e.g., search results page 600) on the mobile phone. The user may select some or all of the search results and add them to the media library. In another example, the user may access the media library using the mobile phone and select content and a device to which to download the content. In still another example, the user may access the media library and play back content in any suitable manner including, for example, downloading the content to the mobile phone for local playback, remotely streaming the content for playback, or by another other manner.

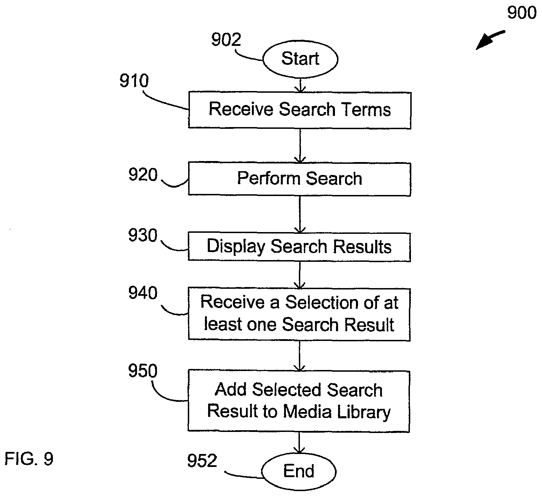

FIG. 9 is a flow chart of illustrative steps involved in adding content to a media library. Process 900 starts at step 902. At step 910, the interactive media guidance application receives search terms in a search page. For example, the interactive media guidance application may receive search terms typed by a user in a search web page accessed over an Internet communications link. The interactive media guidance application may receive search options, for example, category, content source and content type options, for narrowing the search. In some embodiments, the search terms may include logical operators connecting the other search terms.

At step 920, the interactive media guidance application performs the search. For example, the interactive media guidance application may parse the search terms to extract logical operators from the other search terms and search for content based on the parsed search terms and search options set by the user. The interactive media guidance application may direct any suitable device of system 100 (e.g., television distribution facility 104, server 140, server 130, data source 120, user equipment 110) to perform the search. At step 930, the interactive media guidance application displays the search results to the user in a search result page.

At step 940, the interactive media guidance application receives a user selection of one or more results from the search result page. For example, the interactive media guidance application may receive a user selection of one or more listings associated with content found by the search. In some embodiments, the interactive media guidance application may display additional information related to one or more search results for the user before receiving the user selection.

At step 950, the interactive media guidance application adds the search results selected by the user at step 940 to the media library. For example, the interactive media guidance application may receive a user instruction to add the selected programs to the media library. In some embodiments, the interactive media guidance application may add actual content, bookmarks to content, or any other combination of bookmarks and actual content to the media library. Process 900 ends at step 952.

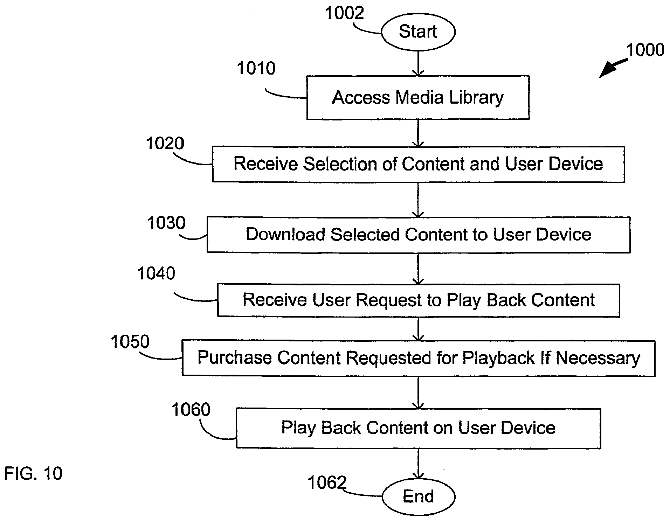

FIG. 10 is a flow chart of illustrative steps for downloading content from the media library for playback. Process 1000 begins at step 1002. At step 1010, the interactive media guidance application accesses the media library. For example, the user may, using a user device, direct the interactive media guidance application to authenticate and access the user's media library. The user device may be any suitable user device.

At step 1020, the interactive media guidance application receives a user selection of particular content for playback from the content available in the media library. The interactive media guidance application also receives a selection of the user device or devices to which to download the content. For example, the interactive media guidance application may receive a user selection to download content to the user device (e.g., the user's home television) from which the user selection is received. As another example, the interactive media guidance application may receive a user selection to download content to a user device (e.g., the user's home television) different from the user device (e.g., a mobile phone) from which the user selection is received.

At step 1030, the interactive media guidance application downloads the particular content to the user device or devices selected at step 1020. For example, the interactive media guidance application directs the content sources of the particular content to transfer the particular content to the selected user devices. As another example, the interactive media guidance application may direct the selected user devices to request the particular content from the content sources. In some embodiments, the interactive media guidance application may determine the capabilities of the selected user devices and provide each user device with a copy of the content that is appropriate for the user device (e.g., having a particular format). At step 1040, the interactive media guidance application receives a playback request. For example, the user may instruct the interactive media guidance application, using a user input device (e.g., user input device 214), to play back particular content.

At step 1050, the user purchases the content, if necessary. If the content is free, step 1050 is skipped. In some embodiments, the user purchases the content prior to downloading the content. In some embodiments, the user may download the content for free, but purchases the content in response to a request to play back the content (e.g., received at step 1340). To purchase the content, in some embodiments, the user may supply the interactive media guidance application with personal information (e.g., an account number, a credit card number). The interactive media guidance application may in turn provide the personal information to an appropriate content source or media distribution facility to release the content for playback. In some embodiments, the interactive media guidance application may already have the user's personal information and may automatically supply the information to an appropriate content source or media distribution facility.

At step 1060, the interactive media guidance application plays back the content on the user device identified at step 1020. Process 1000 ends at step 1062.

One skilled in the art will appreciate that the invention can be practiced by other than the prescribed embodiments, which are presented for purposes of illustration and not of limitation, and the invention is limited only by the claims which follow.

### Items:

1. A method for providing an interactive. media guidance application comprising:
   creating. a media library comprising a Collection of user-selected media content, wherein said creating comprises:
   receiving a user selection of at least one media content that is not currently available; and
   adding a bookmark for the media content to the media library;
   monitoring content sources to determine when the media content becomes available; and
   in response to determining that the at least. one media content has become available, notifying the user that the at least one media content has become available.
2. The method of item 1 further comprising adding the at least one available media content to the media library.
3. The method of item 1 further comprising:
   accessing the media library with a user device;
   selecting a media content from the media library; and
   playing back the selected media content.
4. The method of item 3 further comprising purchasing the selected media content prior to playing back the selected content.
5. The method of item 1 wherein creating a media library further comprises:
   receiving search terms for media content;
   searching for media content based on the search terms;
   displaying search results; and
   wherein receiving a user selection of at least one media content comprises receiving a user selection of at least one of the displayed search results.
6. The method of item 1 wherein receiving a user selection of at least one media content further comprises receiving a user input of information identifying at least one media content.
7. The method of item 1 creating a media library further comprises:
   receiving a message recommending at least one media content to add to the media library; and
   wherein receiving a user selection of at least one media content comprises receiving a user selection of at least one recommended media content.
8. The method of item 7 further comprising:
   monitoring the media content that a user places in a media library; and
   providing recommendations for the at least one media content to the user based on the monitoring of the media library.
9. The method of item 1 wherein the media content is any of a playlist, a bookmark, and actual content.
10. The method of item 1 wherein the media content is available from any of a recording device, the Internet, a video-on-demand server, a broadcast source, and a satellite source.
11. The method of item 1 further comprising accessing the media library using any of television equipment, a personal computer, a laptop computer, a set-top box, a mobile telephone, a personal digital assistant, a BlackBerry™, a portable television, and a portable media player.
12. The method of item 1 further comprising accessing the media library over an Internet communications link.
13. A system for providing an interactive media guidance application comprising a display device, an input device and control circuitry, the control circuitry configured to create a media library comprising a collection of-user-selected media content, by:
   receiving a user selection of at least one media content that is not currently available, and
   adding a bookmark for the media content to the media library;
   monitoring content sources to determine when the media content becomes available; and
   in response to determining that the at least one media content has become available, notifying the user that the at least one media content has become available.
14. The system of item 13 wherein the control circuitry is further configured to add the at least one available media content to the media library.
15. The system of item 13 wherein the control circuitry is further configured to:
   Access the media library with a user device;
   select a media content from the media library; and
   direct the display device to play back the selected media content.
16. The system of item 13 wherein the control circuitry is further configured to purchase the selected media content prior to playing back the selected content.
17. The system of item 13 wherein the control circuitry is further configured to:
   receive search terms for media content;
   search for media content based on the search terms;
   direct the display device to display search results; and
   receive a user selection of at least one of the displayed search results.
18. The system of item 13 wherein the control circuitry is further configured to receive a user input of information identifying at least one media content.
19. The system of item 13 wherein the control circuitry is further configured to:
   receive a message recommending at least one media content to add to the media-library; and
   receive a user selection of at least one recommended media content.
20. The system of item 19 wherein the control circuitry is further configured to:
   monitor the media content that a user places in a media library; and
   provide recommendations for the at least one media content to the user based on the monitoring of the media library.
21. The system of item 13 wherein the media content is any of a playlist, a bookmark, and actual content.
22. The system of item 13 wherein the media content is available from any of a recording device, the Internet, a video-on-demand server, a broadcast source, and a satellite source.
23. The system of item 13 wherein the search results comprise at least one of a playlist, a bookmark, and actual content.
24. The system of item 13 wherein the control circuitry is further configured to access the media library using any of television equipment, a personal computer, a laptop computer, a set-top box, a mobile telephone, a personal digital assistant, a BlackBerry™, a portable television, and a portable media player.
25. The system of item 13 wherein the control circuitry is further configured to access the media library over an Internet communications link.

## Claims

1. A method for sharing media libraries between devices, the method comprising:
transmitting, to a server, a username and password to authenticate a user, wherein the server stores a plurality of media libraries, each media library including respective media content;
accessing, with a first device, a media library of the media libraries in response to the authentication;
receiving, with the first device, a first user selection of particular content for playback from the content available in the media library;
receiving, with the first device, a second user selection to download the particular content to a second device;
directing a content source of the media library to download the particular content to the second user device; and
playing back the particular content on the first device.

2. The method of claim 1 further comprising searching for the particular content by entering search terms in a search box.

3. The method of claim 1 or 2 further comprising receiving a third user selection of the media library from the plurality of media libraries.

4. The method of any one of claims 1-3, wherein the media library includes available content and currently unavailable content.

5. The method of any one of claims 1-4, further comprising uploading the particular content from the first device to the media library.

6. The method of any one of claims 1-5, wherein receiving the second user selection to download the particular content to the second device, comprises:
navigating to the media library webpage;
selecting the particular content; and
selecting the second device as the destination of the particular content.

7. A computer program comprising computer-readable instructions which, when executed by respective one or more processors, cause the one or more processors to perform the method as recited in any of the preceding claims.

8. A system for sharing media libraries between devices, the system comprising:
means for transmitting, to a server, a username and password to authenticate a user, wherein the server stores a plurality of media libraries, each media library including respective media content;
means for accessing, with a first device, a media library of the media libraries in response to the authentication;
means for receiving, with the first device, a first user selection of particular content for playback from the content available in the media library;
means for receiving, with the first device, a second user selection to download the particular content to a second device;
means for directing a content source of the media library to download the particular content to the second user device; and
means for playing back the particular content on the first device.

9. The system of claim 8 further comprising means for searching for the particular content by entering search terms in a search box.

10. The system of claim 8 or 9 further comprising means for receiving a third user selection of the media library from the plurality of media libraries.

11. The system of any one of claims 8-10, wherein the media library includes available content and currently unavailable content.

12. The system of any one of claims 8-11, further comprising means for uploading the particular content from the first device to the media library.

13. The system of any one of claims 8-12, wherein receiving the second user selection to download the particular content to the second device, comprises:
navigating to the media library webpage;
selecting the particular content; and
selecting the second device as the destination of the particular content.
